# EUROPÄISCHE PATENTSCHRIFT

(11) **EP 0 927 323 B1**
(45) Veröffentlichungstag und Bekanntmachung des Hinweises auf die Patenterteilung: **05.06.2002**
(21) Anmeldenummer: 97944873.5
(22) Anmeldetag: 11.09.1997
(51) Int. Cl.: F24D 3/16

(54) **KÜHLDECKE, ELEMENTE FÜR KÜHLDECKE UND KÜHLROHRMATTE ZUR ANWENDUNG BEI EINER KÜHLDECKE**
COOLING CEILING, COOLING CEILING ELEMENTS AND COOLING TUBULAR ARMATURE
COUVERCLE REFROIDISSEUR, ELEMENTS DE COUVERCLE REFROIDISSEUR ET D'ARMATURE TUBULAIRE DE REFROIDISSEMENT

(30) Priorität: 11.09.1996 DE 19636944
(43) Veröffentlichungstag der Anmeldung: 07.07.1999
(73) Patentinhaber: Weber, Reiner, 84624 Neuötting (DE); Schwendemann, Michael, 83059 Kolbermoor (DE)
(72) Erfinder: Weber, Reiner, 84624 Neuötting (DE); Schwendemann, Michael, 83059 Kolbermoor (DE)
(74) Vertreter: Manitz, Finsterwald & Partner GbR
(86) Internationale Anmeldenummer: EP9704987
(87) Internationale Veröffentlichungsnummer: WO9811390

(56) Entgegenhaltungen:
- EP-A- 0 501 470
- DE-A- 3 919 143
- DE-A- 3 919 862
- DE-A- 4 131 797
- DE-A- 4 137 753
- DE-U- 9 215 163
- DE-U- 29 620 860
- GB-A- 2 271 174

## Beschreibung

Die vorliegende Erfindung bezieht sich auf eine Kühldecke, bestehend aus Kühlrohren, welche mittels eines Tragsystems an einer Rohdecke oder einer bestehenden Decke angebracht bzw. anbringbar sind, wie im Oberbegriff von Anspruch 1 angegeben, sowie auf ein Element und eine Kühlrohrmatte zur Anwendung bei einer solchen Kühldecke.

Kühldecken der oben genannten Art finden bekanntlich vornehmlich in Kaufhäusern, Büros und größeren Gebäuden Anwendung. Es besteht das Bestreben, die Räumlichkeiten vor allem im Sommer zu kühlen, und es sind hierfür im Prinzip zwei verschiedene Systeme bekannt, die eine Alternative zu Klimaanlagen bieten. Bei Klimaanlagen wird die Raumluft ständig umzirkuliert und auf eine vorwählbare Temperatur gekühlt. Solche Klimaanlagen sind verhältnismäßig aufwendig, müssen regelmäßig gewartet werden und verursachen im Regelfall Lärm und können zu einer unerwünschten Übertragung von Krankheitserregern führen.

Bei einer Kühldecke der eingangs genannten Art wird mit Hilfe von Kühlrohren bzw. von Kühlmatten eine Flüssigkeit transportiert, die für eine Kühlung der in die Deckenhöhe steigenden Warmluft sorgt, die dann als Kaltluft nach unten fällt. Es wird sozusagen nach einer gewissen Zeit die abgekühlte Temperatur nach unten abgestrahlt. Der Vorteil gegenüber herkömmlichen Klimaanlagen bezieht sich auf einen fast wartungsfreien Betrieb und Kühlung der Räumlichkeit ohne anfallenden Lärm.

Bekannt sind einerseits Kühldecken, bestehend aus Kühlrohren, die auch in Mattenform geliefert werden und in Verbindung mit Metalldekken angewandt werden.

Bekannt ist auch die Anwendung von Kunststoffkühlmatten, die anschließend überputzt bzw. überspachtelt werden.

Trotz der Vorteile von Kühldecken weisen die vorgenannten Systeme aber auch Nachteile auf.

Bei dem System, bei dem Kühlmatten und Kühlrohre im Zusammenhang mit Metalldecken verwendet werden, entsteht ein hoher Kühlverlust nach oben; es wird sozusagen die zu erzielende Kühlwirkung zu stark nach oben abgestrahlt.

Bei der zweiten Variante, bei denen die Kühlmatten anschließend überputzt oder überspachtelt werden, ist die Installation zu sehr an bauliche Gegebenheiten gebunden. Durch die Verlegung der Kühlmatten im Putz besteht auch die Gefahr der Entstehung von Schwitzwasser, welches zur Folge hat, daß sich die Deckschicht von den Kühlmatten löst bzw. Risse oder häßliche Flecken entstehen. Außerdem ist bei beiden vorgenannten Systemen eine Behinderung des Bauablaufes und andere Gewerke unumgänglich.

Eine Kühldecke der eingangs genannten Art ist der DE-A-41 31 797 zu entnehmen. Diese befaßt sich mit einem Flächenelement für die Raumklimatisierung mit von einem Heiz- oder Kühlmedium durchströmten Kanälen mit dem besonderen Kennzeichen, daß die Kanäle in einer wärmeleitenden Schicht zwischen Plattenelementen ausgebildet sind, die aus Gipskarton, Spannplatten oder Gipsfaserplatten bestehen können. Die wärmeleitende Schicht selbst ist aus einer wärmeleitenden Vergußmasse, wie Fugenfüller, Gips, Anhydrit oder dergleichen, ausgebildet. Diese wärmeleitfähige Vergußmasse kann gleichzeitig eine Verklebung der unteren und oberen Platten des Elements bewirken. Die Rohrleitung für das Heiz- oder Kühlmedium ist in Windungen in diese wärmeleitende Schicht eingebettet, wobei im Randbereich des Flächenelementes die Rohrleitung über einen Anschlußabschnitt etwa senkrecht zur Ebene des Flächenelementes aus diesem herausführt, was der Anschluß der einzelnen Elemente an Vor- und Rücklaufleitungen ermöglicht.

Diese Art der Konstruktion wäre aber in der Praxis äußerst problematisch.

Zunächst wären die Elemente der DE-A 41 31 797 aufgrund der gewählten Art der Konstruktion bei Einhaltung der normalen Plattengrößen äußerst schwer, so daß die Anbringung der Elemente an in üblichen Abständen angeordneten Deckenträgern problematisch wäre, da die Arbeiter die Platten oberhalb ihrer Köpfe halten müßten, während sie für die Anbringung der abgehängten Deckenträger sorgen.

Man könnte hier zwar Abhilfe schaffen, indem man die Elemente in kleineren Flächengrößen herstellt, auch dies ist aber problematisch, weil man hierdurch wesentlich größere Längen abzudeckender Fugen erhält. Es wäre dann schwierig, eine ebene Deckenfläche zu erzielen, so daß die nachfolgende Füll- und Glättarbeit zunehmen würde.

Darüber hinaus stellen die Elemente mit ihren nach oben herausstehenden Anschlüssen ein Gebilde dar, das relativ aufwendig zu transportieren ist, denn bei einer Stapelung der Elemente müßten Maßnahmen getroffen werden, um zu verhindern, daß die herausstehenden Anschlüsse beschädigt werden. Diese Maßnahmen müßten beispielsweise in Form von Abstandsstücken so konzipiert werden, daß sie die Oberflächen der Platten nicht beschädigen. Sie würden zudem einen erhöhten Aufwand darstellen, denn sie müßten entweder zurück zum Hersteller befördert oder entsorgt werden.

Darüber hinaus wäre es in der Praxis sehr schwierig, die Anschlüsse an die Vor- und Rücklaufleitungen anzuschließen, denn man müßte häufig in einem eng begrenzten Raum oberhalb des Kopfes und oberhalb der abgehängten Deckenträger arbeiten, wobei die entsprechenden Anschlüsse nur von einer Seite erreichbar wären und dies wohl auch nur durch einen begrenzten Spalt.

Darüber hinaus läßt die DE-A-41 31 797 das Problem der Deckenbeleuchtung ungelöst.

Aufgabe der Erfindung ist es, eine Kühldeckenkonstruktion vorzusefien, welche in Betrieb einen höheren Wirkungsgrad aufweist, einen sehr flexiblen Bauablauf ermöglicht, vielseitige Möglichkeiten bei Beleuchtung und Installation bietet, vorzugsweise ohne Überprüfung der Unterdecke einen Brandschutz von mindestens F 30 erreicht, in hohen Räumen, z.B. in Altbauten, ohne zusätzliche Unterdecken auf die gewünschte Höhe eingebaut werden kann, als Träger für Akustikputze oder Anstriche benutzt werden kann und eine Einsparung der berechneten Kühlmattenfläche erreichen läßt.

Zur Lösung dieser Aufgabe wird bei einer Kühldecke der eingangs genannten Art erfindungsgemäß vorgesehen, daß die Kühlrohre in Form von aneinander angeschlossenen Kühlrohrmatten vorgesehen und in flachen Hohlräumen angeordnet sind, die durch die Abstandshalter zwischen den oberen und unteren Trockenbauplatten gebildet sind.

Die erfindungsgemäße Kühldecke ist somit eine Konstruktion, die in Trockenbauweise hergestellt werden kann. Sie wird aus an sich bekannten, preisgünstig verfügbaren Bauelementen in handlichen Größen aufgebaut. Somit wird der Bauablauf durch den Einbau der Kühldecke nicht beeinträchtigt. Dieser Einbau ist im Prinzip nicht aufwendiger als der Einbau einer normalen Einbaudecke.

Da es sich um eine trockene Bauweise handelt, bestehen kaum Beschränkungen bezüglich Beleuchtung und Installation. Kabel können auf die Oberseite der Decke lose gelegt werden, ggf. in offenen Kabelkanälen, und können dort durch die Kühldecke durchgeführt werden, wo keine Kühlmatten vorhanden sind. Bei Anwendung von feuerhemmenden Trockenbauplatten, insbesondere Gipskartonplatten oder Gipsfaserplatten, bestehen keine Schwierigkeiten, einen Brandschutz von F 30 zu erreichen. Darüber hinaus können diese Platten ohne weiteres mit Akustikputz, Tapeten oder Anstrichen versehen werden, zumal keine Übergänge sichtbar sind.

Durch die flexiblere Abhängung der Kühldecke können bis zu 10% der berechneten Kühlmatten eingespart werden, da z.B. je nach Raum individuell die fertige Deckenhöhe berechnet werden kann.

Eine besonders bevorzugte Ausführungsform der akustischen Isolierung geht aus Anspruch 2 hervor.

Nach Anspruch 3 wird vorgesehen, daß die Kühldecke aus vorgefertigten Elementen besteht, die zu der fertigen Decke zusammengesetzt werden. Dies kann auf mindestens zwei verschiedenen Wegen realisiert werden. Einerseits besteht die Möglichkeit nach Anspruch 4, daß jedes Element aus einer oberen Trockenbauplatte und einer unteren Trokkenbauplatte und mindestens zwei vorzugsweise riegeiförmig ausgebildeten Abstandshaltern sowie vorzugsweise aus einer Wärmesperre und einer Schallisolierung besteht. Diese Elemente können dann entsprechend den weiteren Patentansprüchen 5 oder 6 rasterartig nebeneinander eingebaut werden, um die gesamte Kühldecke herzustellen. Die Hohlräume ermöglichen auch eine Verbindung der Rohre der Kühlmatten untereinander nach Belieben in Reihe oder parallel. Nach der Installation der einzelnen Elemente können, falls erwünscht, die Fugen zwischen den einzelnen Elementen überspachtelt oder überklebt werden oder - als Gestaltungsmerkmal der Decke - auch als Teilungsmuster frei sichtbar bleiben.

Es wird eine leichte Bauweise erreicht. Beispielsweise können nach Fertigstellung der Abhängerkonstruktion und Anbringung von CD-Profilen an den einzelnen Abhängern die oberen Platten an den CD-Profilen mittels Schnellbauschrauben angebracht werden. Die vorzugsweise vorgesehene Aluminiumfolie wird vorzugsweise vorher auf die unteren Seiten der oberen Platten kaschiert. Dies kann aber ggf. nach der Anbringung der oberen Platten geschehen. Dann werden Riegel, bspw. in Form von preisgünstig erhältlichen Gipsriegeln, die als Abstandhalter dienen sollen, mittels weiterer Schnellbauschrauben an den oberen Platten befestigt. Daraufhin werden die Kühlmatten in die zwischen den Riegeln vorgesehenen Hohlräume eingesetzt und durch Anbringung der unteren Trockenbauplatten in den so gebildeten Hohlräumen gehalten, wobei die unteren Trockenbauplatten ebenfalls mittels Schnellbauschrauben an den Stellen der Abstandshalter befestigt werden und die Schnellbauschrauben sowohl die Gipsriegel wie auch die oberen Trockenbauplatten und ggf. die CD-Profile des Tragsystems durchgreifen können. Danach ist es lediglich erforderlich, falls erwünscht, die Fugen zwischen den unteren Trockenbauplatten zu spachteln oder zu überkleben. Falls erwünscht, kann ein Akustikvlies auf der oberen Seite der unteren Trockenbauplatten vorgesehen oder in Form einer Tapete auf der unteren Seite der unteren Trockenbauplatten angebracht werden.

Besonders bevorzugte Ausführungsformen der erfindungsgemäßen Konstruktion lassen sich den weiteren Ansprüchen 5 bis 12 entnehmen.

Ein Element zur Anwendung bei der Herstellung einer Kühldeckenkonstruktion ist dem Anspruch 13 zu entnehmen. Schließlich befassen sich die Ansprüche 14 und 15 mit Kühlrohrmatten, die sich ebenfalls für die Anwendung mit einer erfindungsgemäßen Kühldecke eignen. Nach Anspruch 14 wird die Wärmesperre auf der oberen Seite der Kühlrohrmatte vorgesehen und die Schallisolierung befindet sich auf der Unterseite der Kühlrohrmatte. D.h. diese zwei vorzugsweise vorgesehenen Bestandteile der erfindungsgemäßen Kühldecke werden bereits mit den Kühlrohrmatten geliefert und bilden mit dieser eine Baueinheit, die dann in die vorgesehenen Hohlräume eingefügt wird.

Die Erfindung wird nachfolgend näher erläutert anhand von Ausführungsbeispielen unter Bezugnahme auf die Zeichnung. In dieser zeigt:
- Fig. 1: einen schematischen Querschnitt durch eine erste erfindungsgemäße Ausführungsform,
- Fig. 2: einen schematischen Querschnitt durch eine zweite erfindungsgemäße Ausführungsform und
- Fig. 3: einen schematischen Querschnitt durch eine Kühlrohrmatte nach der Erfindung.

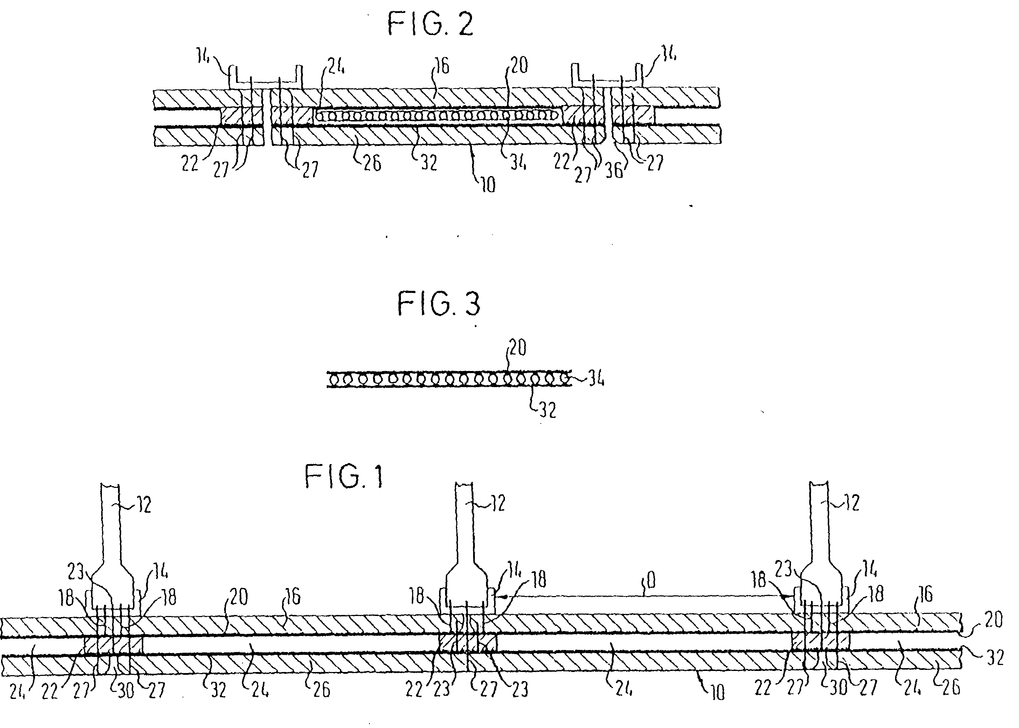

Figur 1 zeigt einen Teilquerschnitt durch eine Kühldecke 10, welche in diesem Beispiel als abgehängte Decke ausgeführt ist. Hierfür sind Abhänger 12 vorgesehen, welche an einer Rohdecke bzw. einer Altdecke befestigt werden können. Unterhalb dieser Abhänger befinden sich sog. CD-Profile 14, die als Tragschienen dienen und an sich, wie auch die Abhänger, gut bekannt sind. In diesem Beispiel darf der Abstand (Mittenabstand) D von Tragschiene zu Tragschiene maximal 625 mm betragen. An diese CD-Deckenprofile 14 werden von unten Gipskartonplatten 16 mit Abmessungen von 2000 mm Länge, 1250 mm Breite und 12,5 mm Dicke mit Hilfe von Schnellbauschrauben 18 befestigt. Diese haben bspw. eine Länge von 25 mm. Die Erfindung ist nicht auf diese vorzugsweise angegebenen Abmessungen beschränkt. Es können Platten mit anderen Abmessungen verwendet werden, bspw. können Plattendicken im herkömmlichen Bereich von 9,5 mm bis 18 mm ohne weiteres gewählt werden.

An der Unterseite der durch die Gipskartonplatten 16 gebildeten Beplankung ist eine Alufolie 20 befestigt, die an den Längsfugen selbstklebend überlappt ist.

Diese Alufolie wirkt als Wärmesperre, aber auch erfindungsgemäß als Dampfsperre.

Unterhalb der Alufolie sind Abstandshalter 22 mit einem lichten Abstand von maximal 50 cm befestigt, wobei diese Befestigung durch Kleben oder durch Schnellbauschrauben 23 erreicht werden kann. In letzterem Fall werden die Schnellbauschrauben durch die Abstandshalter in die oberen Gipskartonplatten 16 hineingeschraubt und, falls erwünscht, auch in die CD-Profile. Die Abstandshalter sind hier in Form von langen Streifen von Gipskartonplatten oder Streifen von Gipsfaserplatten (nachfolgend lediglich Gipsriegel genannt) realisiert, die parallel zueinander angeordnet sind. Es wäre aber auch denkbar, kürzere Gipsriegel zu verwenden, die dann bspw. an den Knotenpunkten eines quadratischen Musters auszulegen wären. Die Verwendung von längeren Riegeln wird jedoch bevorzugt, da dies die Anbringung der unteren Gipskartonplatten erleichtert.

Zwischen den Gipsriegeln 22 und unterhalb der Gipskartonplatten 16 bzw. unterhalb der Alufolie 20 werden dann Hohlräume 24 gebildet, in denen Kühlrohrmatten (in Fig. 1 nicht gezeigt) aufgenommen werden. Diese Kühlrohrmatten, die vorzugsweise aus Kunststoff bestehen, sind im Handel erhältlich und werden in diesem Beispiel während der Montage der Kühlmatten in den Hohlräumen 24 provisorisch befestigt, und zwar mittels eines zweiseitig haftenden Klebebandes. Nach der Befestigung der Gipsriegel 22 und der Kühlmatten wird nun eine zweite Beplankung, ebenfalls aus Gipskartonbauplatten 26 mit Abmessungen von 2000 mm Länge, 1250 mm Breite und 12,5 mm Dicke, mit Hilfe von Schnellbauschrauben an den Stellen der Gipsriegel 22 befestigt. Auch hier sind diese Abmessungen nur vorzugsweise angegeben. An diesen unteren Gipsbauplatten 26 befindet sich vorzugsweise auf der Oberseite ein Akustikvlies 32 von 2 mm Dicke, welches bspw. bauseits mit den Gipskartonplatten 26 verklebt werden kann und bewirkt, daß die eingebrachten Kühlrohrmatten direkt an der ersten Beplankung, d.h. an der Alufolie 20, anstehen. Das Akustikvlies drückt gegen die Unterseite der Kühlrohrmatten und verhindert, daß freie Hohlräume entstehen, die zu Kälteverlusten und Vibrationen an der Decke führen können. Die zwischen den Plattenstoßseiten der unteren Gipskartonplatten 26 gebildeten Fugen 30 werden mit Fugenmasse unter Einlegen eines Fugenbandes gespachtelt, so daß von unten eine durchgehende Decke sichtbar ist. Wie aus Fig. 1 ersichtlich ist, sind die unteren Platten 26 um die halbe Breite gegenüber den oberen Platten versetzt. Dies wirkt sich günstig beim Brandverhalten aus, ist aber nicht zwingend erforderlich.

Es soll betont werden, daß nicht jeder Hohlraum 24 mit einer Kühlrohrmatte versehen werden muß, sondern manche Hohlräume 24 freigelassen werden können, und es kann dann die Beleuchtung in diese freigelassenen Bereiche bspw. in einem regelmäßigen Muster eingebaut werden.

Man merkt, daß mit den hier gewählten Abmessungen die Schnellbauschrauben 27, welche zur Befestigung der unteren Gipskartonplatten 26 an der Oberkonstruktion benutzt werden, in die CD-Profile 14 hineingeschraubt werden und die unteren Gipskartonplatten dort direkt an den CD-Profilen befestigen. Ggf. können dazwischen angeordnete Gipsriegel (nicht gezeigt) vorgesehen werden. Die gewählten Abmessungen stellen im übrigen sicher, daß die Abstandshalter an den Stellen der CD-Profile bevorzugt angeordnet sind, wobei mit Gipsriegeln von 125 mm Breite jeder zweite Gipsriegel als Abstandshalter die Fuge zwischen zwei unteren Platten 26 überbrückt und dadurch Hohlräume von 50 cm entstehen, welche günstig sind für die Anbringung der Kühlrohrmatten. Auch bei den oberen Platten werden die Fugen zwischen jeweils zwei benachbarten Platten durch die Abstandshalter überbrückt, was sich als sehr günstig beim Brandverhalten auswirkt.

Um die Anbringung der Schnellbauschrauben zu erleichtern, können die unteren Gipskartonplatten 26 mit entsprechenden Markierungen an den Stellen der Schnellbauschrauben versehen werden, bspw. durch aufgezeichnete Linien oder durch ein aufgedrucktes Schablonenmuster.

In diesem Beispiel können auch die Gipsriegel 22 bereits beim Hersteller an den oberen Gipskartonplatten 16 befestigt werden, wobei die Alufolie dann entweder nur zwischen den Riegeln vorgesehen oder als durchgehende Folie auch auf die Unterseite der Riegel aufgebracht werden kann.

Bei dieser Art der Konstruktion besteht die Kühldecke aus folgenden Elementen:
a) aus oberen Trockenbauplatten 16 mit einer daran befestigten Wärmesperre, bspw. in Form der Alufolie 20 (wobei die Wärmesperre vorzugsweise an der unteren Seite der oberen Trockenbauplatten angeordnet ist),
b) aus Abstandshaltern 22, die an der Unterseite der oberen Trockenbauplatten 16 anbringbar sind, ggf. aber bereits bei der Herstellung an den oberen Platten anbringbar sind,
c) aus unteren Trockenbauplatten 26, welche an den Abstandshaltern 22 befestigbar sind, um die die Kühlrohrmatten aufnehmenden Hohlräume 24 zu bilden, und
d) ggf. einer Schallisolierung, vorzugsweise in Form eines Akustikvlieses 32, welche entweder zwischen den Abstandshaltern 22 an der Oberseite der unteren Platte oder nach Art einer Tapete (nicht gezeigt) auf der Unterseite der unteren Platte 26 anbringbar ist.

Figur 2 zeigt eine alternative Ausführungsform einer Kühldecke 10, bei der gleiche Teile mit gleichen Bezugszeichen versehen werden. Hier werden die unteren Gipskartonplatten 26 in Ausrichtung mit den oberen Gipskartonplatten 16 angeordnet und jeweils eine obere Gipskartonplatte mit einer unteren Gipskartonplatte mittels zwei Abstandshaltern 22 und Schnellbauschrauben 27 zu Elementen gebildet. Auch hier wird auf der Unterseite der oberen Gipskartonplatte 16 eine Alufolie 20 als Wärmesperre und oberhalb der unteren Gipskartonplatte 26 ein Akustikvlies 32 zur Schallisolierung vorgesehen. Im zwischen den Platten 16 und 26 gebildeten Hohlraum 24 befindet sich eine Kühlrohrmatte 34, welche bei diesem Element entweder bei der Herstellung vor der Anbringung der unteren Gipskartonplatte 26 in den Hohlraum 24 gelegt oder aber auch nach Fertigstellung des Elementes von der Seite in den Hohlraum eingeschoben werden kann.

Da in diesem Beispiel ein aus zwei Gipskartonplatten bestehendes Element etwas schwer und unhandlich zu werden droht, wird die Breitenabmessung der Gipskartonplatten halbiert, so daß die Fugen zwischen den einzelnen Elementen in diesem Beispiel jeweils genau an den Stellen der CD-Profile zu liegen kommen. Die Elemente können aber durchaus andere Abmessungen haben, und die Anordnung der Abhänger kann entsprechend gewählt werden.

Die Ausführungsform nach Figur 2 zeigt auch, daß es nicht unbedingt erforderlich ist, die Fugen zwischen den benachbarten Elementen zu verspachteln. Die Fugen können auch nach Art einer Schattenfuge offen gelassen werden.

Mit 36 wird gezeigt, daß die Kanten der unteren Gipskartonplatten 26 abgeschrägt werden können, um ein gefälliges optisches Muster im Fugenbereich zu erzeugen.

Um das Brandverhalten zu verbessern, können die einzelnen Elemente nach dieser Konstruktion mit Nuten an zwei Seiten und Federn an den anderen zwei Seiten ausgebildet sein, so daß bei der fertiggestellten Kühldecke jede Fuge durch eine feuerhemmende Feder überbrückt ist.

Schließlich zeigt Figur 3 eine Kühlrohrmatte nach der Erfindung, welche an der Oberseite mit einer Aluschicht, bspw. in Form einer Alufolie 20, und an der unteren Seite mit einer Schallisolierung, bspw. in Form eines Akustikvlieses 32 versehen ist.

Obwohl die vorstehenden Ausführungsbeispiele hauptsächlich unter Anwendung von Gipskartonplatten beschrieben sind, welche zumindest in der Bauform nach Figur 1 einen Brandschutzfaktor von F 30 erreichen lassen, können ohne weiteres andere Trockenbauplatten benutzt werden, bspw. sog. Gipsfaserplatten. Auch können die Abmessungen der einzelnen Elemente nach Belieben gewählt werden. Weiterhin ist es nicht zwingend erforderlich, daß die Anbringung über Abhänger und CD-Profile erfolgt. Die Elemente der Kühldecke können auch entweder direkt an einer Rohbaudecke oder an einer Altdecke oder über eine Lattenanordnung an derartigen Decken befestigt werden.

## Patentansprüche

1. Kühldecke (10), bestehend aus Kühlrohren (34), welche mittels eines Tragsystems (12, 14) an einer Rohdecke oder einer bestehenden Decke angebracht bzw. anbringbar sind, wobei die Kühlrohre innerhalb einer Sandwichkonstruktion mit oberen und unteren, feuerhemmenden Trockenbauplatten (16, 26) wie Gipskartonplatten oder Gipsfaserplatten sowie zwischen den Trockenbauplatten sich befindlichen Abstandshaltern angeordnet sind, wobei die oberen Platten (16) wahlweise mit einer Wärmesperre (20), z.B. einer Folie aus Aluminium, versehen sind, **dadurch gekennzeichnet, daß** die Kühlrohre in Form von aneinander angeschlossenen Kühlrohrmatten vorgesehen und in flachen Hohlräumen (24) angeordnet sind, die durch die Abstandshalter (22) zwischen den oberen und unteren Trockenbauplatten (16, 26) gebildet sind.

2. Kühldecke (10) nach Anspruch 1, **dadurch gekennzeichnet, daß** ein Akustikvlies (32) unterhalb der Kühlrohrmatten (34) auf der Oberseite der unteren Trockenbauplatten (26) angeordnet ist.

3. Kühldecke (10) nach einem der vorhergehenden Ansprüche, **dadurch gekennzeichnet, daß** sie aus vorgefertigten Elementen (16, 22, 26) zusammengesetzt ist.

4. Kühldecke (10) nach Anspruch 3, **dadurch gekennzeichnet, daß** die die Kühlrohrmatten in Hohlräumen (24) aufnehmenden Elemente jeweils eine obere Trockenbauplatte (16), eine untere Trockenbauplatte (26) und mindestens zwei, vorzugsweise riegelförmig ausgebildete Abstandshalter (22) umfassen.

5. Kühldecke (10) nach Anspruch 4, **dadurch gekennzeichnet, daß** bei einer aus den genannten Elementen zusammengesetzten Decke nicht jeder Hohlraum mit einer Kühlrohrmatte (34) versehen ist.

6. Kühldecke (10) nach einem der vorhergehenden Ansprüche, **dadurch gekennzeichnet, daß** die Befestigung der oberen und unteren Platten (16, 26) aneinander an Stellen erfolgt, an denen Abstandshalter (22) vorgesehen sind.

7. Kühldecke (10) nach Anspruch 6, **dadurch gekennzeichnet, daß** die oberen Platten (16) entweder direkt an der oberhalb der oberen Platten vorgesehenen Decke oder an einer Lattenanordnung oder an Abhängern (12), vorzugsweise an von entsprechenden Abhängern getragenen sogenannten CD-Profilen (14) angebracht sind, welche einen maximalen Mittenabstand von 625 mm aufweisen.

8. Kühldecke (10) nach Anspruch 7, **dadurch gekennzeichnet, daß** die oberen Platten (16) Gipskartonplatten sind, welche eine Länge von 2000 mm, eine Breite von 1250 mm und eine Dicke von 12,5 mm aufweisen.

9. Kühldecke (10) nach einem der Ansprüche 7 oder 8, **dadurch gekennzeichnet, daß** die Abstandshalter (22) Gipsriegel mit einer Breite von etwa 12,5 cm und einer Dicke von etwa 6 mm sind, wobei die Gipsriegel mit einem lichten Abstand von max. 50 cm angeordnet sind.

10. Kühldecke (10) nach einem der Ansprüche 7 bis 9, **dadurch gekennzeichnet, daß** die unteren Platten (26) Gipskartonplatten sind, welche vorzugsweise eine Länge von 2000 mm, eine Breite von 1250 mm und eine Dicke von 12,5 mm aufweisen.

11. Kühldecke (10) nach Anspruch 2 und einem der Ansprüche 7 bis 10, **dadurch gekennzeichnet, daß** das Akustikvlies (32) eine Dicke von 2 mm aufweist.

12. Kühldecke nach einem der vorhergehenden Ansprüche, **dadurch gekennzeichnet, daß** die Hohlräume eine Verbindung der Rohre der Kühlmatten untereinander in Reihe oder parallel ermöglichen.

13. Vorgefertigtes Element (16, 22, 26) zur Anwendung bei einer Kühldecke (10) nach einem der vorhergehenden Ansprüche, wobei das Element aus der Sandwichkonstruktion mit der oberen und der unteren Trockenbauplatte (16, 26) besteht, die über dazwischenliegende Abstandshalter (22) verbunden sind und damit einen flachen Hohlraum (24) dazwischen für das Einlegen von Kühlrohrmatten (34) einschließen.

14. Kühlrohrmatte (34) zur Anwendung mit einer Kühldecke (10) nach einem der vorhergehenden Ansprüche 1 bis 12, **dadurch gekennzeichnet, daß** sie auf der einen Seite mit einer Wärmesperre (20) und auf der anderen Seite mit einer Schallisolierung (32) versehen ist.

15. Kühlrohrmatte (34) nach Anspruch 14, **dadurch gekennzeichnet, daß** die Wärmesperre (20) aus einer Alufolie oder einer aufgedampften Aluschicht besteht.

## Claims

1. Cooling ceiling (10) comprising cooling tubes (34) which are attached or attachable by means of a carrying system (12, 14) to a rough ceiling or to an existing ceiling, with the cooling tubes being arranged inside a sandwich construction with upper and lower, fire resistant, dry building panels (16, 26) such as plasterboard panels or fibre reinforced gypsum panels and with spacers located between the dry building panels, with the upper panels (16) optionally being provided with a thermal barrier (20), for example with a foil of aluminium, **characterized in that** the cooling tubes are provided in the form of cooling tube mats which are connected to one another and are arranged in flat cavities (24) which are formed by the spacers (22) between the upper and lower dry building panels (16, 26).

2. Cooling ceiling (10) in accordance with claim 1, **characterized in that** a sound insulating fleece (32) is arranged beneath the cooling tube mats (34) on the upper side of the lower dry building panels (26).

3. Cooling ceiling (10) in accordance with one of the preceding claims, **characterized in that** it can be assembled from pre-manufactured elements (16, 22, 26).

4. Cooling ceiling (10) in accordance with claim 3, **characterized in that** the elements which receive the cooling tube mats in hollow cavities (24) each comprise an upper dry building panel (16), a lower dry building panel (26) and at least two preferably bar-like spacers (22).

5. Cooling ceiling (10) in accordance with claim 4, **characterized in that**, with a ceiling which is put together from the named elements, not every element is provided with a cooling tube mat (34).

6. Cooling ceiling (10) in accordance with one of the preceding claims, **characterized in that** the attachment of the upper and lower panels (16, 26) to one another takes place at positions at which spacers (22) are provided.

7. Cooling ceiling (10) in accordance with claim 6, **characterized in that** the upper panels (16) are either directly attachable to the upper ceiling or to a lath arrangement or to hangers (12), preferably to so-called CD-sections (14) carried by corresponding hangers, which have a maximum centre-to-centre spacing of 625 mm.

8. Cooling ceiling (10) in accordance with claim 7, **characterized in that** the upper panels (16) are plaster board panels which preferably have a length of 2000 mm, a width of 1250 mm and a thickness of 12.5 mm.

9. Cooling ceiling (10) in accordance with one of the claims 7 or 83, **characterized in that** the spacers (22) are plaster bars with a width of approximately 12.5 cm and a thickness of approximately 6 mm, with the plaster bars being arranged with a clear spacing of 50 cm maximum.

10. Cooling ceiling (10) in accordance with one of the claims 7 to 9, **characterized in that** the lower panels (26) are plaster board panels which preferably have a length of 2000 mm, a width of 1250 mm and a thickness of 12.5 mm.

11. Cooling ceiling (10) in accordance with claim 2 and one of the claims 7 to 10, **characterized in that** the sound insulating fleece (32) has a thickness of 2 mm.

12. Cooling ceiling in accordance with any one of the preceding claims, **characterized in that** the hollow cavities enable a connection of the tubes of the cooling mats to one another in series or in parallel.

13. Pre-finished element (16, 22, 26) for use in a cooling ceiling (10) in accordance with any one of the preceding claims, wherein the element consists of the sandwich construction with the upper and lower dry building panels (16, 26) which are connected together via spacers (22) lying between them and thus include a shallow hollow cavity between them for the insertion of cooling tube mats (34).

14. Cooling tube mat (34) for use with a cooling ceiling (10) in accordance with any one of the preceding claims 1 to 12, **characterized in that** it is provided on the one side with a thermal barrier (20) and on the other side with a sound insulation (32).

15. Cooling tube mat (34) in accordance with claim 14, **characterized in that** the thermal barrier (20) consists of an aluminium foil or of a vapour deposited aluminium layer.

## Revendications

1. Plafond refroidisseur (10) comprenant des tubes de refroidissement (34) qui sont montés ou qui peuvent être montés sur un plafond brut ou un plafond existant à l'aide d'un système support (12, 14), les tubes de refroidissement étant disposés à l'intérieur d'une construction sandwich avec des plaques sèches coupe-feu (16, 26) supérieures et inférieures telles que des plaques en fibres et plâtre ou en carton et plâtre ou en staff ainsi que des tasseaux se trouvant entre les plaques sèches, les plaques supérieures (16) étant munies, en option, d'une barrière thermique (20), par exemple une feuille en aluminium, **caractérisé en ce que** les tubes de refroidissement sont prévus sous forme de tapis de tubes de refroidissement reliés les uns aux autres et sont disposés dans des cavités plates (24) qui sont formées par les tasseaux (22) entre les plaques sèches (16, 26) supérieures et inférieures.

2. Plafond refroidisseur (10) selon la revendication 1, **caractérisé en ce qu'**un non-tissé acoustique (32) est disposé en dessous des tapis de tubes de refroidissement (34) sur la face supérieure des plaques sèches inférieures (26).

3. Plafond refroidisseur (10) selon l'une des revendications précédentes, **caractérisé en ce qu'**il est composé d'éléments préfabriqués (16, 22, 26).

4. Plafond refroidisseur (10) selon la revendication 3, **caractérisé en ce que** les éléments contenant les tapis de tubes de refroidissement dans les cavités (24) comprennent chacun une plaque sèche supérieure (16), une plaque sèche inférieure (26) et au moins deux tasseaux (22), de préférence en forme de traverse.

5. Plafond refroidisseur (10) selon la revendication 4, **caractérisé en ce que**, dans un plafond constitué des éléments mentionnés, toutes les cavités ne comportent pas un tapis de tubes de refroidissement (34).

6. Plafond refroidisseur (10) selon l'une des revendications précédentes, **caractérisé en ce que** la fixation des plaques supérieures et inférieures (16, 26) les unes avec les autres se fait à des emplacements où sont prévus des tasseaux (22).

7. Plafond refroidisseur (10) selon la revendication 6, **caractérisé en ce que** les plaques supérieures (16) sont montées soit directement sur le plafond prévu au-dessus des plaques supérieures soit sur une structure à lattes ou sur des décrochements (12), de préférence sur des profilés appelés profilés-CD supportés par des suspensions adaptées lesdits profilés ayant un entraxe maximal de 625 mm.

8. Plafond refroidisseur (10) selon la revendication 7, **caractérisé en ce que** les plaques supérieures (16) sont des plaques en placoplâtre qui ont une longueur de 2000 mm, une largeur de 1250 mm et une épaisseur de 12,5 mm.

9. Plafond refroidisseur (10) selon l'une des revendications 7 ou 8, **caractérisé en ce que** les tasseaux (22) sont des traverses en plâtre avec une largeur d'environ 12,5 cm et une épaisseur d'environ 6 mm, les traverses en plâtre étant disposées avec un écartement maximum de 50 cm.

10. Plafond refroidisseur (10) selon l'une des revendications 7 à 9, **caractérisé en ce que** les plaques inférieures (26) sont des plaques en staff qui ont, de préférence, une longueur de 2000 mm, une largeur de 1250 mm et une épaisseur de 12,5 mm.

11. Plafond refroidisseur (10) selon la revendication 2 et l'une des revendications 7 à 10, **caractérisé en ce que** le non-tissé acoustique (32) a une épaisseur de 2 mm.

12. Plafond refroidisseur (10) selon l'une des revendications précédentes, **caractérisé en ce que** les cavités permettent une liaison des tubes des tapis de refroidissement entre eux en série ou en parallèle.

13. Elément préfabriqué (16, 22, 26) à utiliser dans un plafond refroidisseur (10) selon l'une des revendications précédentes, l'élément étant constitué de la construction sandwich avec la plaque sèche supérieure et la plaque sèche inférieure (16, 26) qui sont reliées par des tasseaux (22) placés entre elles et qui renferment ainsi une cavité (24) pour la mise en place de tapis de tubes de refroidissement (34).

14. Tapis de tubes de refroidissement (34) à utiliser avec un plafond refroidisseur (10) selon l'une des revendications précédentes 1 à 12, **caractérisé en ce qu'**il comporte, d'un côté, une barrière thermique (20) et, de l'autre côté, une isolation phonique (32).

15. Tapis de tubes de refroidissement (34) selon la revendication 14, **caractérisé en ce que** la barrière thermique (20) est constituée d'une feuille d'aluminium ou d'une couche d'aluminium métallisée sous vide.
